# EUROPEAN PATENT APPLICATION

(11) **EP 4 287 454 A1**
(43) Date of publication of application: **06.12.2023**
(21) Application number: 21930760.0
(22) Date of filing: 17.03.2021
(51) Int. Cl.: H02J 9/06

(54) **ENERGY STORAGE SYSTEM, AND POWER SUPPLY METHOD FOR BATTERY MANAGEMENT SYSTEM**

(71) Applicant: Huawei Digital Power Technologies Co., Ltd., Shenzhen, Guangdong 518043 (CN)
(72) Inventor: ZHANG, Chunlei, Shenzhen, Guangdong 518129 (CN); YU, Shijiang, Shenzhen, Guangdong 518129 (CN); WU, Zhipeng, Shenzhen, Guangdong 518129 (CN)
(74) Representative: Gill Jennings & Every LLP
(86) International application number: PCT/CN2021/081249
(87) International publication number: WO 2022/193165

(57) **Abstract**

This application provides an energy storage system and a power supply method for a battery management system. The energy storage system may include an energy storage module, a direct current bus, a power conversion module, a first power supply module, a second power supply module, and a battery management system. The first power supply module may be configured to: select a larger voltage between an output direct current voltage of the energy storage module and a bus voltage of the direct current bus as an input voltage, and output a first direct current voltage to the second power supply module based on the input voltage. The first power conversion module may be configured to: convert the alternating current mains or an output alternating current voltage of the power conversion module into a second direct current voltage, and output the second direct current voltage to the second power supply module. In this case, the second power supply module may be configured to: select a larger voltage between the first direct current voltage and the second direct current voltage as a target voltage, and supply power to the battery management system based on the target voltage. In this application, power supply reliability for the battery management system may be improved, costs of the energy storage system are reduced, and an application scope is extended.

## Description

### TECHNICAL FIELD

This application relates to the field of power electronics technologies, and in particular, to an energy storage system and a power supply method for a battery management system.

### BACKGROUND

An energy storage system can improve power quality of a power grid and effectively utilize renewable energy, and may be widely used in power generation and distribution fields of a power system. In the energy storage system, independent alternating current mains or a power conversion system (power conversion system, PCS) may be used as an alternating current power supply to supply power to a battery management system (battery management system, BMS). The battery management system monitors working statuses of a battery and the energy storage system.

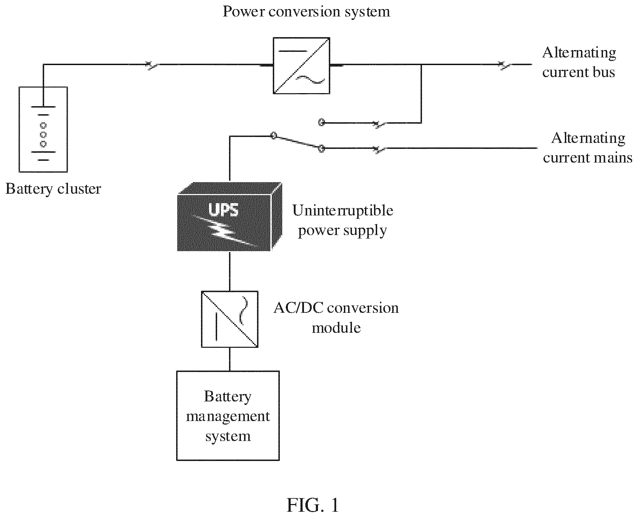

The inventor of this application finds in a research and practice process that, as shown in FIG. 1, in the conventional technology, an energy storage system usually rectifies, by using an alternating current (direct current, AC)/direct current (direct current, DC) conversion module, an alternating current (that is, a bus voltage of an alternating current bus) provided by alternating current mains and/or a power conversion system, to supply power to a battery management system in the energy storage system. The battery management system may monitor a voltage, a current, an electrochemical cell temperature, and the like of a battery in real time, and monitor an environment of the energy storage system, to ensure battery safety and extend a service life of the energy storage system. However, when an alternating current failure occurs, the battery management system may stop working, and cannot detect working statuses of the battery and the energy storage system. Therefore, in the conventional technology, as shown in FIG. 1, an uninterruptible power supply (uninterruptible power supply, UPS) is configured in the energy storage system, and the uninterruptible power supply is used as a backup power supply, to supply power to the battery management system when the alternating current failure occurs. However, costs of the uninterruptible power supply are excessively high, and an application scope is narrow.

### SUMMARY

This application provides an energy storage system and a power supply method for a battery management system, to improve power supply reliability for the battery management system, reduce costs of the energy storage system, and extend an application scope.

According to a first aspect, this application provides an energy storage system. The energy storage system may include an energy storage module, a direct current bus, a power conversion module, a first power supply module, a second power supply module, and a battery management system. The energy storage module herein may include at least one battery cluster (that is, one or more battery clusters). A first input end of the first power supply module is connected to an output end of the energy storage module, a second input end of the first power supply module is connected to the direct current bus, an output end of the first power supply module is connected to a first input end of a second power supply module, a second input end of the second power supply module may be connected to alternating current mains or the output end of the power conversion module by using a first power conversion module, and an output end of the second power supply module is connected to the battery management system. The first power supply module may be configured to: select a larger voltage between an output direct current voltage of the energy storage module and a bus voltage of the direct current bus as an input voltage, and output a first direct current voltage to the second power supply module based on the input voltage. The input voltage herein may be the output direct current voltage of the energy storage module or the bus voltage of the direct current bus. In other words, the output direct current voltage of the energy storage module or the bus voltage of the direct current bus may be understood as a direct current backup power supply that supplies power to the battery management system. Because the first power conversion module has an AC/DC conversion function, the first power conversion module may be configured to: convert the alternating current mains or an output alternating current voltage of the power conversion module into a second direct current voltage, and output the second direct current voltage to the second power supply module. In this case, the second power supply module may be configured to: select a larger voltage between the first direct current voltage and the second direct current voltage as a target voltage, and supply power to the battery management system based on the target voltage. The target voltage herein may be the first direct current voltage or the second direct current voltage. In other words, the first direct current voltage or the second direct current voltage may be understood as a direct current auxiliary power supply (which may be referred to as a direct current auxiliary power supply for short) that supplies power to the battery management system. In the energy storage system provided in this application, the alternating current mains or the output alternating current voltage of the power conversion module, the output direct current voltage of the energy storage module, or the bus voltage of the direct current bus may be used as a plurality of backup power supplies for supplying power to the battery management system, thereby improving power supply reliability for the battery management system. In addition, power may be supplied from the energy storage system to the battery management system, thereby reducing costs of the energy storage system, increasing economic values of the energy storage system, and extending an application scope.

With reference to the first aspect, in a first possible implementation, the first power supply module includes a first diode, a second diode, and a second power conversion module. A positive electrode of the first diode is used as the first input end of the first power supply module and is connected to the energy storage module, a positive electrode of the second diode is used as the second input end of the first power supply module and is connected to the direct current bus, a negative electrode of the first diode and a negative electrode of the second diode are connected to an input end of the second power conversion module, and an output end of the second power conversion module is used as the output end of the first power supply module.

With reference to the first possible implementation of the first aspect, in a second possible implementation, when the direct current bus is faulty or cannot work normally, the bus voltage of the direct current bus is less than the output direct current voltage of the energy storage module. In this case, the output direct current voltage of the energy storage module may be understood as a direct current backup power supply that supplies power to the battery management system. In this case, the second power conversion module may be configured to: when the output direct current voltage of the energy storage module is greater than the bus voltage of the direct current bus, use the output direct current voltage of the energy storage module as the input voltage, and convert the input voltage into the first direct current voltage. In the energy storage system provided in this application, power may be obtained from the output direct current voltage of the energy storage module to supply power to the battery management system, to improve power supply reliability, and an uninterruptible power supply does not need to be configured, thereby reducing costs of the energy storage system and increasing economic values of the energy storage system.

With reference to the first possible implementation of the first aspect, in a third possible implementation, when the direct current bus works normally, the bus voltage of the direct current bus is greater than the output direct current voltage of the energy storage module. In this case, the bus voltage of the direct current bus may be understood as a direct current backup power supply that supplies power to the battery management system. In this case, the second power conversion module may be configured to: when the output direct current voltage of the energy storage module is less than the bus voltage of the direct current bus, use the bus voltage of the direct current bus as the input voltage, and convert the input voltage into the first direct current voltage. In the energy storage system provided in this application, power may be obtained from the bus voltage of the direct current bus to supply power to the battery management system, thereby improving power supply reliability and saving battery power. In addition, an uninterruptible power supply does not need to be configured, thereby reducing costs of the energy storage system and increasing economic values of the energy storage system.

With reference to any one of the first aspect to the third possible implementation of the first aspect, in a fourth possible implementation, the second power supply module includes a third diode, a fourth diode, and a third power conversion module, a positive electrode of the third diode is used as the first input end of the second power supply module and is connected to the output end of the first power supply module, a negative electrode of the third diode and a negative electrode of the fourth diode are connected to an input end of the third power conversion module, a positive electrode of the fourth diode is used as the second input end of the second power supply module and is connected to the first power conversion module, and an output end of the third power conversion module is used as the output end of the second power supply module.

With reference to the fourth possible implementation of the first aspect, in a fifth possible implementation, when the alternating current mains or the output alternating current voltage of the power conversion module is powered down or powered off, the second direct current voltage is less than the first direct current voltage. In this case, the first direct current voltage may be understood as a direct current auxiliary power supply that supplies power to the battery management system. The first direct current voltage herein is determined by the bus voltage of the direct current bus or the output direct current voltage of the energy storage module. In this case, the third power conversion module may be configured to: when the first direct current voltage is greater than the second direct current voltage, use the first direct current voltage as the target voltage, convert the target voltage into a target direct current voltage, and supply power to the battery management system based on the target direct current voltage. In the energy storage system provided in this application, power may be obtained from the bus voltage of the direct current bus or the output direct current voltage of the energy storage module to supply power to the battery management system, thereby improving power supply reliability. In addition, an uninterruptible power supply does not need to be configured, thereby reducing costs of the energy storage system and increasing economic values of the energy storage system.

With reference to the fourth possible implementation of the first aspect, in a sixth possible implementation, when the alternating current mains or the output alternating current voltage of the power conversion module normally supplies power, the second direct current voltage is greater than the first direct current voltage. In this case, the second direct current voltage may be understood as a direct current auxiliary power supply that supplies power to the battery management system. In other words, the alternating current mains or the output alternating current voltage of the power conversion module may be used as an alternating current backup power supply that supplies power to the battery management system. In this case, the third power conversion module may be configured to: when the first direct current voltage is less than the second direct current voltage, use the second direct current voltage as the target voltage, convert the target voltage into a target direct current voltage, and supply power to the battery management system based on the target direct current voltage. In the energy storage system provided in this application, power may be obtained from the alternating current mains or the output alternating current voltage of the power conversion module to supply power to the battery management system, thereby improving power supply efficiency, saving a direct current, and increasing benefits of the energy storage system. In addition, an uninterruptible power supply does not need to be configured, thereby reducing costs of the energy storage system and increasing economic values of the energy storage system.

With reference to any one of the first aspect to the sixth possible implementation of the first aspect, in a seventh possible implementation, the first power conversion module includes a plurality of power conversion units, and a quantity of power conversion units is greater than a target quantity required by supply power of the energy storage system (that is, redundancy design is performed on the first power conversion module). The first power conversion module is configured to: when a target power conversion unit in the plurality of power conversion units is faulty, convert, based on each power conversion unit other than the target power conversion unit, the alternating current mains or the output alternating current voltage of the power conversion module into the second direct current voltage. In the energy storage system provided in this application, redundancy design may be performed on the first power conversion module, and when the target power conversion unit is faulty, another power conversion unit normally runs, to supply power to the battery management system. Therefore, power supply reliability is improved, and an application scope is extended.

With reference to any one of the first aspect to the seventh possible implementation of the first aspect, in an eighth possible implementation, the battery management system includes a container monitoring unit, and the container monitoring unit is configured to collect a system parameter of the energy storage system or perform data transmission with a system controller of the energy storage system, to monitor a working status of the energy storage system. The system parameter herein may include a temperature and humidity of the energy storage system, or another parameter. In the energy storage system provided in this application, after power is normally supplied to the battery management system, the energy storage system may be monitored in real time by using the container monitoring unit, to ensure a service life of the energy storage system.

With reference to any one of the first aspect to the eighth possible implementation of the first aspect, in a ninth possible implementation, the battery management system further includes a battery control unit, and the energy storage module includes at least one battery cluster. The battery control unit may be configured to: detect a battery cluster parameter of each battery cluster, and control, based on the battery cluster parameter of each battery cluster, charging or discharging of a battery pack in each battery cluster, to balance a current and a voltage of each battery cluster. The battery cluster parameter herein may include a state of charge value, a state of health value, a state of power value, and another parameter. In the energy storage system provided in this application, after power is normally supplied to the battery management system, the current and the voltage of each battery cluster may be balanced by using the battery control unit, so that the application scope is extended.

With reference to any one of the first aspect to the ninth possible implementation of the first aspect, in a tenth possible implementation, the battery management system further includes a plurality of battery management units, the energy storage module includes at least one battery cluster, one battery cluster includes a plurality of battery packs, one battery pack corresponds to one battery management unit, and each of the plurality of battery management units is configured to balance a battery parameter of each battery pack in each battery cluster. The battery parameter herein may include a state of charge value, a state of health value, a state of power value, a maximum working current, and another parameter. In the energy storage system provided in this application, after power is normally supplied to the battery management system, the battery parameter of each battery pack in each battery cluster may be balanced by using each battery management unit, so that the application scope is wider.

With reference to any one of the first aspect to the tenth possible implementation of the first aspect, in an eleventh possible implementation, the energy storage system further includes a fourth power conversion module, the energy storage module may be connected to the direct current bus by using the fourth power conversion module, and the fourth power conversion module may be configured to convert the output direct current voltage of the energy storage module into the bus voltage required by the direct current bus. In other words, the output direct current voltage of the fourth power conversion module is the same as the bus voltage of the direct current bus, and the output direct current voltage of the fourth power conversion module may be understood as a direct current backup power supply that supplies power to the battery management system. When the fourth power conversion module works normally, the bus voltage of the direct current bus is greater than the output direct current voltage of the energy storage module. On the contrary, when the fourth power conversion module is faulty or cannot work normally, the bus voltage of the direct current bus is less than the output direct current voltage of the energy storage module. In the energy storage system provided in this application, power may be obtained from the output direct current voltage of the fourth power conversion module (that is, power may be obtained from the bus voltage of the direct current bus), to supply power to the battery management system, thereby improving power supply reliability and saving battery power. In addition, an uninterruptible power supply does not need to be configured, thereby reducing costs of the energy storage system and increasing economic values of the energy storage system.

With reference to any one of the first aspect to the eleventh possible implementation of the first aspect, in a twelfth possible implementation, the battery control unit in the battery management system is integrated into the fourth power conversion module. Optionally, the battery control unit in the battery management system may alternatively be integrated outside the fourth power conversion module. This may be specifically determined according to an actual application scenario, and is not limited herein.

According to a second aspect, this application provides a power supply method for a battery management system. The method is applicable to an energy storage system. The energy storage system includes an energy storage module, a direct current bus, a power conversion module, a first power supply module, a second power supply module, and a battery management system. A first input end of the first power supply module is connected to the energy storage module, a second input end of the first power supply module is connected to the direct current bus, an output end of the first power supply module is connected to a first input end of the second power supply module, a second input end of the second power supply module is connected to alternating current mains or the power conversion module by using a first power conversion module, and an output end of the second power supply module is connected to the battery management system. In the method, the first power supply module selects a larger voltage between an output direct current voltage of the energy storage module and a bus voltage of the direct current bus as an input voltage, and outputs a first direct current voltage to the second power supply module based on the input voltage. The first power conversion module converts the alternating current mains or an output alternating current voltage of the power conversion module into a second direct current voltage, and outputs the second direct current voltage to the second power supply module. The second power supply module selects a larger voltage between the first direct current voltage and the second direct current voltage as a target voltage, and supplies power to the battery management system based on the target voltage.

With reference to the second aspect, in a first possible implementation, when the output direct current voltage of the energy storage module is greater than the bus voltage of the direct current bus, the first power supply module may use the output direct current voltage of the energy storage module as the input voltage, convert the input voltage into the first direct current voltage, and output the first direct current voltage to the second power supply module.

With reference to the second aspect, in a second possible implementation, when the output direct current voltage of the energy storage module is less than the bus voltage of the direct current bus, the first power supply module may use the bus voltage of the direct current bus as the input voltage, convert the input voltage into the first direct current voltage, and output the first direct current voltage to the second power supply module.

With reference to any one of the second aspect to the second possible implementation of the second aspect, in a third possible implementation, when the first direct current voltage is greater than the second direct current voltage, the second power supply module may use the first direct current voltage as the target voltage, convert the target voltage into a target direct current voltage, and supply power to the battery management system based on the target direct current voltage.

With reference to any one of the second aspect to the second possible implementation of the second aspect, in a fourth possible implementation, when the first direct current voltage is less than the second direct current voltage, the second power supply module may use the second direct current voltage as the target voltage, convert the target voltage into a target direct current voltage, and supply power to the battery management system based on the target direct current voltage.

With reference to any one of the second aspect to the fourth possible implementation of the second aspect, in a fifth possible implementation, the first power conversion module includes a plurality of power conversion units, and a quantity of power conversion units is greater than a target quantity required by supply power of the energy storage system. When a target power conversion unit in the plurality of power conversion units is faulty, the first power conversion module may convert, based on each power conversion unit other than the target power conversion unit, the alternating current mains or the output alternating current voltage of the power conversion module into the second direct current voltage.

In this application, a plurality of backup power supplies may be used to supply power to the battery management system, thereby improving power supply reliability for the battery management system. In addition, power is supplied from the energy storage system to the battery management system, thereby reducing costs of the energy storage system, increasing economic values of the energy storage system, and extending an application scope.

### BRIEF DESCRIPTION OF DRAWINGS

FIG. 1 is a schematic diagram of a structure of a power supply system of a battery management system;
FIG. 2 is a schematic diagram of an application scenario of an energy storage system according to this application;
FIG. 3 is a schematic diagram of a structure of an energy storage system according to this application;
FIG. 4 is a schematic diagram of another structure of an energy storage system according to this application;
FIG. 5 is a schematic diagram of another structure of an energy storage system according to this application;
FIG. 6 is a schematic diagram of another structure of an energy storage system according to this application;
FIG. 7 is a schematic diagram of still another structure of an energy storage system according to this application; and
FIG. 8 is a schematic flowchart of a power supply method for a battery management system according to this application.

### DESCRIPTION OF EMBODIMENTS

An energy storage system provided in this application is applicable to a plurality of types of power generation devices such as a photovoltaic power generation device or a wind power generation device, and different types of electric devices (such as a power grid, a household device, or an industrial and commercial electric device), and may be applied to the automobile field, a microgrid field, or the like. The energy storage system provided in this application is applicable to energy storage of different types of energy storage units. Components in the different types of energy storage units may include a lithium ion battery, a lead-acid battery (or referred to as a lead-acid battery), a super-capacitor (also referred to as an electrochemical capacitor), and the like. A specific type of the component in the energy storage unit is not specifically limited in this application. For ease of description, the energy storage system provided in this application is described by using a battery as an example.

The energy storage system provided in this application may include an energy storage module, a direct current bus, a power conversion module, a first power supply module, a second power supply module, and a battery management system. A first input end of the first power supply module is connected to an output end of the energy storage module, a second input end of the first power supply module is connected to the direct current bus, an output end of the first power supply module is connected to a first input end of a second power supply module, a second input end of the second power supply module may be connected to alternating current mains or the output end of the power conversion module by using a first power conversion module, and an output end of the second power supply module is connected to the battery management system. The first power supply module may select a larger voltage between an output direct current voltage of the energy storage module and a bus voltage of the direct current bus as an input voltage, and output a first direct current voltage to the second power supply module based on the input voltage. The first power conversion module may convert the alternating current mains or an output alternating current voltage of the power conversion module into a second direct current voltage, and output the second direct current voltage to the second power supply module. In this case, the second power supply module may select a larger voltage between the first direct current voltage and the second direct current voltage as a target voltage, and supply power to the battery management system based on the target voltage. In the energy storage system provided in this application, the plurality of backup power supplies may be used to supply power to the battery management system, thereby improving power supply reliability for the battery management system. In addition, power may be supplied from the energy storage system to the battery management system, thereby reducing costs of the energy storage system, increasing economic values of the energy storage system, and extending an application scope. The energy storage system provided in this application may be applicable to different application scenarios, for example, a photovoltaic power generation scenario, a wind power generation scenario, or an electric device power supply scenario. The following uses the electric device power supply scenario as an example for description. Details are not described below again.

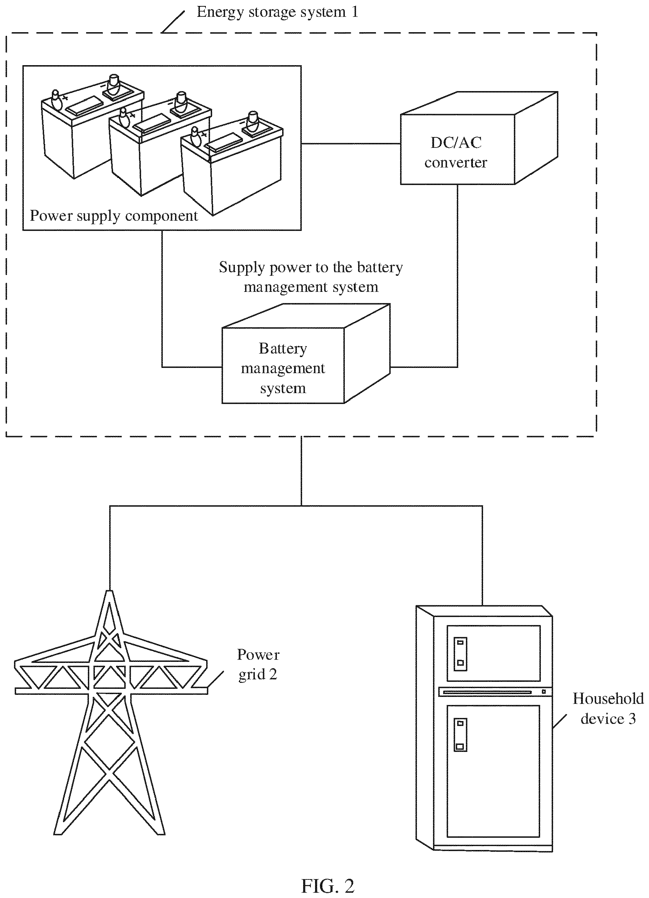

FIG. 2 is a schematic diagram of an application scenario of an energy storage system according to this application. As shown in FIG. 2, the energy storage system (for example, an energy storage system 1) may include a power supply component, a DC/AC converter, and a battery management system. The power supply component herein may include at least one battery cluster and the DC/DC converter, the battery clusters are connected in parallel, and one battery cluster may include a plurality of battery cells connected in series. The battery cell may be a battery pack, and one battery pack may include one or more battery units (a voltage of a battery unit is usually between 2.5 V and 4.2 V) connected in series and in parallel, to form a minimum energy storage and management unit. In a process in which the energy storage system 1 supplies power to a power grid (for example, a power grid 2) or a load (for example, a household device 3), the battery management system may be powered by alternating current mains or an output voltage of the DC/AC converter to work normally. At least one battery cluster in the power supply component may provide a direct current voltage for the DC/DC converter. The DC/DC converter performs power conversion on the direct current voltage and outputs the direct current voltage to the DC/AC converter, that is, the power supply component may output the direct current voltage to the DC/AC converter. At this time, the DC/AC converter may perform power conversion on the direct current voltage input by the power supply component to obtain an alternating current voltage, and output the alternating current voltage to the power grid 2 or the household device 3, to supply power to the power grid 2 and the household device 3. When the alternating current mains or the output voltage of the DC/AC converter cannot supply power to the battery management system, the battery management system may be powered by the energy storage system 1, to enable the battery management system to work normally. For example, the battery management system is powered by an output voltage of at least one battery cluster or an output voltage of a DC/DC converter. In this case, the battery management system may monitor information such as a voltage, a current, and an electrochemical cell temperature of a battery in real time, and may further monitor a working environment of the energy storage system 1, to ensure battery safety and extend a service life of the energy storage system 1, so that the energy storage system 1 can better supply power to a load or a power grid.

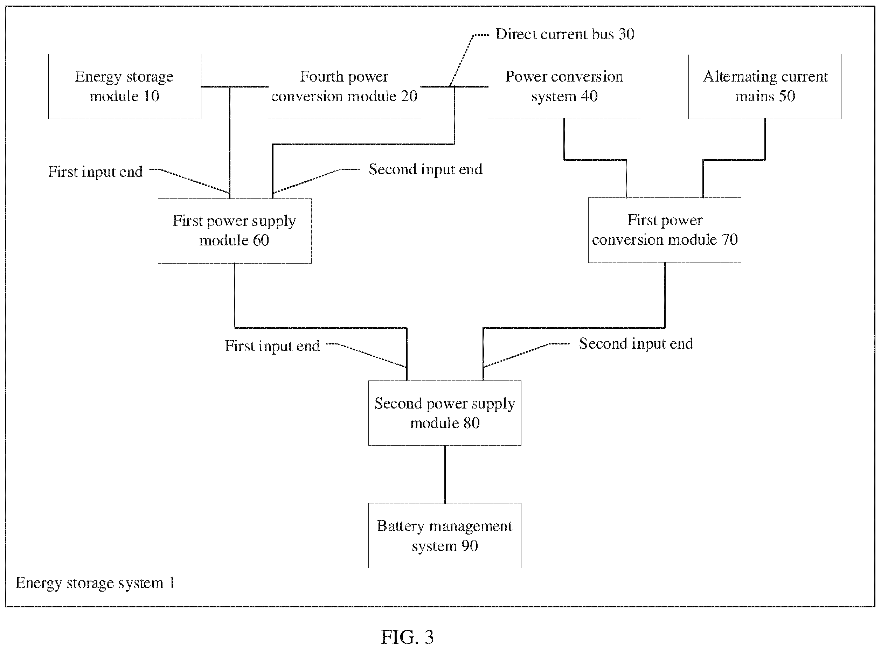

The following describes, with reference to FIG. 3 to FIG. 7, an energy storage system provided in this application and a working principle of the energy storage system.

FIG. 3 is a schematic diagram of a structure of an energy storage system according to this application. As shown in FIG. 3, the energy storage system 1 may include an energy storage module 10, a fourth power conversion module 20, a direct current bus 30, a power conversion module 40, alternating current mains 50, a first power supply module 60, a first power conversion module 70, a second power supply module 80, and a battery management system 90. The energy storage system 1 herein may be integrated in a container, and the alternating current mains 50 may refer to an alternating current having a sine wave, for example, an alternating current provided by an alternating current grid. A first input end of the first power supply module 60 is connected to an output end of the energy storage module 10 and an input end of the fourth power conversion module 20, a second input end of the first power supply module 60 is connected to the direct current bus 30 and an output end of the fourth power conversion module 20, an output end of the first power supply module 60 is connected to a first input end of the second power supply module 80, a second input end of the second power supply module 80 may be connected to the alternating current mains 50 or an output end of the power conversion module 40 by using the first power conversion module 70, and an output end of the second power supply module 80 is connected to the battery management system 90. It may be understood that, the second input end of the second power supply module 80 may be connected to an output end of the first power conversion module 70, and an input end of the first power conversion module 70 is connected to the alternating current mains 50 or the output end of the power conversion module 40. In this application, one or more functional modules that have an alternating current AC/direct current DC conversion function in the energy storage system may be collectively referred to as the first power conversion module. In this application, one or more functional modules that are connected in parallel to the energy storage module and that have a direct current DC/direct current DC conversion function may be collectively referred to as the fourth power conversion module.

In some feasible implementations, the first power supply module 60 may select a larger voltage between an output direct current voltage of the energy storage module 10 and a bus voltage of the direct current bus 30 as an input voltage, and output a first direct current voltage to the second power supply module 80 based on the input voltage. The bus voltage of the direct current bus 30 herein may also be understood as an output direct current voltage of the fourth power conversion module 20. The first power conversion module 70 may convert (that is, rectify) the alternating current mains 50 or an output alternating current voltage of the power conversion module 40 into a second direct current voltage, and output the second direct current voltage to the second power supply module 80. In this case, the second power supply module 80 may select a larger voltage between the first direct current voltage and the second direct current voltage as a target voltage, and supply power to the battery management system 90 based on the target voltage. After supplying power to the battery management system 90, the battery management system 90 may monitor information such as a voltage, a current, and an electrochemical cell temperature of a battery in the energy storage module 10 in real time, and may further monitor a working environment of the energy storage system 1, to ensure battery safety and extend a service life of the energy storage system 1, so that the energy storage system 1 can better supply power to a load, thereby improving power supply efficiency of the energy storage system 1.

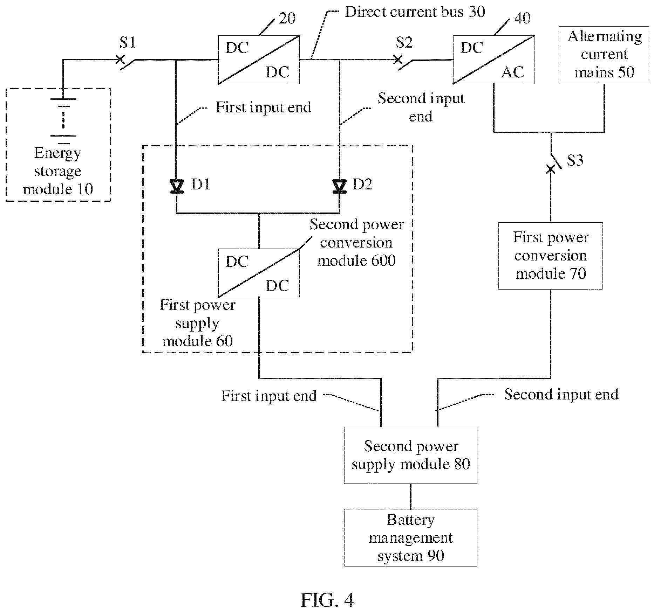

In some feasible implementations, FIG. 4 is a schematic diagram of another structure of an energy storage system according to this application. As shown in FIG. 4, the energy storage module 10 shown in FIG. 3 is connected to the fourth power conversion module 20 through a circuit breaker S1, the fourth power conversion module 20 may be connected to the input end of the power conversion module 40 through a direct current bus 30 and a circuit breaker S2, and the output end of the power conversion module 40 and the alternating current mains 40 may be connected to the input end of the first power conversion module 70 through a circuit breaker S3. The fourth power conversion module 20 may be a DC/DC conversion module, the power conversion module 40 may be a DC/AC conversion module, and the first power conversion module 70 may be an AC/DC conversion module. The fourth power conversion module 40 may convert the output direct current voltage of the energy storage module 10 into the bus voltage required by the direct current bus 30. In other words, the output direct current voltage of the fourth power conversion module 40 is the same as the bus voltage of the direct current bus 30. The circuit breaker herein may refer to a switch apparatus that can close, carry, and turn off a current in a normal loop condition, and can close, carry, and turn off a current in an abnormal loop condition within a specified time. In a process of normally supplying power to the battery management system 90, the energy storage module 10, the fourth power conversion module 20, and the alternating current mains 50 or the power conversion module 40 all work normally, and the circuit breaker S 1, the circuit breaker S2, and the circuit breaker S3 are all closed. On the contrary, when the energy storage module 10 is faulty, the circuit breaker S 1 is automatically turned off; when the fourth power conversion module 20 is faulty, the circuit breaker S2 is automatically turned off; and when the alternating current mains 50 or the power conversion module 40 is faulty or powered off, the circuit breaker S3 is automatically turned off, to protect the energy storage system.

In some feasible implementations, as shown in FIG. 4, the first power supply module 60 shown in FIG. 3 may include a first diode D1, a second diode D2, and a second power conversion module 600. A positive electrode of the first diode D1 is used as the first input end of the first power supply module 60 and is connected to the energy storage module 10 and the input end of the fourth power conversion module 20, a positive electrode of the second diode D2 is used as the second input end of the first power supply module 60 and is connected to the direct current bus 30 and the output end of the fourth power conversion module 20, a negative electrode of the first diode D1 and a negative electrode of the second diode D2 are connected to an input end of the second power conversion module 600, and an output end of the second power conversion module 600 is used as the output end of the first power supply module 60. In this application, one or more functional modules that have a direct current DC/direct current DC conversion function (that is, a rectification function) or a direct current voltage boosting function in the first power supply module may be collectively referred to as the second power conversion module. For example, the second power conversion module 600 may be a DC/DC conversion module.

In some feasible implementations, the fourth power conversion module 40 may convert the output direct current voltage of the energy storage module 10 into the bus voltage required by the direct current bus 30. In other words, the output direct current voltage of the fourth power conversion module 40 is the same as the bus voltage of the direct current bus 30. When the fourth power conversion module 20 is faulty or cannot work normally, the bus voltage of the direct current bus 30 is less than the output direct current voltage of the energy storage module 10. In this case, the output direct current voltage of the energy storage module 10 may be understood as a direct current backup power supply that supplies power to the battery management system 90. When the bus voltage of the direct current bus 30 is less than the output direct current voltage of the energy storage module 10, the first diode D1 is conducted, and the second diode D2 is cut off, so that the first diode D1 and the second diode D2 perform an either-or selection, to output the output direct current voltage of the energy storage module 10 to the second power conversion module 600. In this case, the second power conversion module 600 may use the output direct current voltage of the energy storage module 10 as the input voltage, convert the input voltage into the first direct current voltage, and output the first direct current voltage to the second power supply module 80.

In some feasible implementations, when the fourth power conversion module 20 works normally, the bus voltage of the direct current bus 30 is greater than the output direct current voltage of the energy storage module 10. In this case, the bus voltage of the direct current bus 30 may be understood as a direct current backup power supply that supplies power to the battery management system 90. In other words, the output direct current voltage of the fourth power conversion module 20 is understood as a direct current backup power supply that supplies power to the battery management system 90. When the bus voltage of the direct current bus 30 is greater than the output direct current voltage of the energy storage module 10, the first diode D1 is cut off, and the second diode D2 is conducted, so that the first diode D1 and the second diode D2 perform an either-or selection, to output the bus voltage of the direct current bus 30 to the second power conversion module 600. In this case, the second power conversion module 600 may use the bus voltage of the direct current bus 30 as the input voltage, convert the input voltage into the first direct current voltage, and output the first direct current voltage to the second power supply module 80.

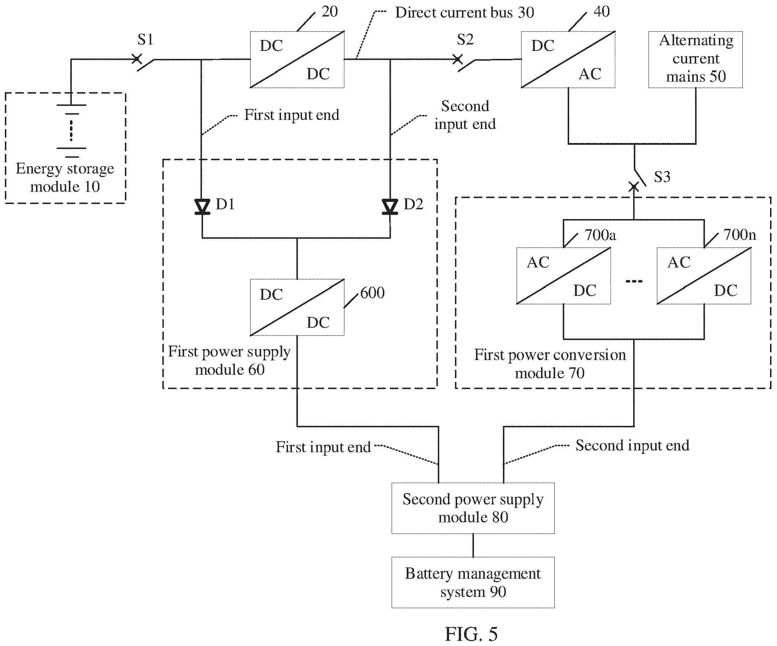

In some feasible implementations, FIG. 5 is a schematic diagram of another structure of an energy storage system according to this application. As shown in FIG. 5, the first power conversion module 70 shown in FIG. 4 includes a plurality of power conversion units (for example, a power conversion unit 700a to a power conversion unit 700n), a quantity of power conversion units is greater than a target quantity required by supply power of the energy storage system 1, and the power conversion unit may be an AC/DC conversion unit. The target quantity may be determined based on a ratio of the supply power required by a load of the energy storage system 1 to supply power of a single power conversion unit. For example, the target quantity may be a value obtained by rounding the ratio. It may be understood that a quantity of power conversion units in the first power conversion module 70 is at least 1 greater than the target quantity. In other words, the first power conversion module 70 is configured with at least one more power conversion unit than the target quantity, to implement redundancy design of the first power conversion module 70. When a target power conversion unit in the plurality of power conversion units is faulty, the first power conversion module 70 may convert, based on each power conversion unit other than the target power conversion unit, the alternating current mains 50 or the output alternating current voltage of the power conversion module 40 into the second direct current voltage. In this application, the faulty power conversion unit in the first power conversion module may be collectively referred to as the target power conversion unit.

For ease of description, the following uses the power conversion unit 700a to the power conversion unit 700n as an example for description. It is assumed that one more power conversion unit (for example, the power conversion unit 700n) than the target quantity is configured for the first power conversion module 70. When the target power conversion unit (for example, the power conversion unit 700a) in the power conversion unit 700a to the power conversion unit 700n is faulty, the first power conversion module 70 may convert, based on a power conversion unit 700b to the power conversion unit 700n, the alternating current mains 50 or the output alternating current voltage of the power conversion module 40 into the second direct current voltage, and output the second direct current voltage to the second power supply module 80. It can be learned that redundancy design may be performed on the first power conversion module, so that when the target power conversion unit is faulty, another power conversion unit can normally run to supply power to the battery management system, thereby improving power supply reliability and extending an application scope.

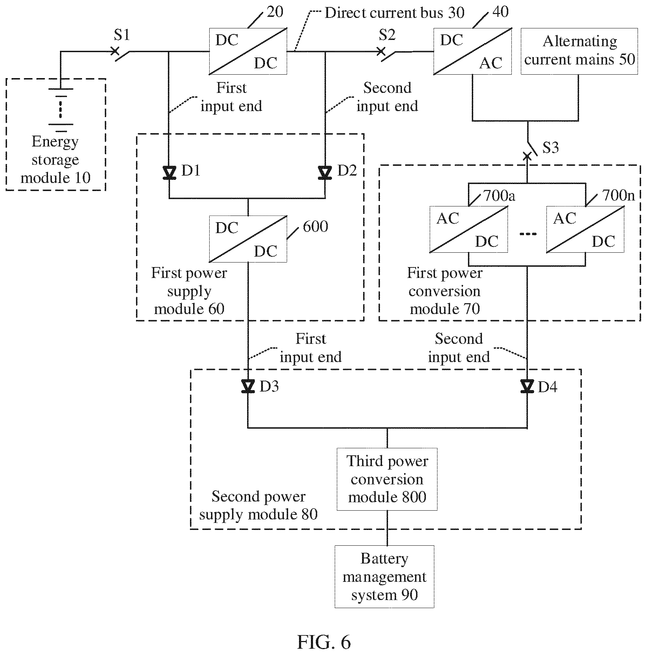

In some feasible implementations, FIG. 6 is a schematic diagram of another structure of an energy storage system according to this application. As shown in FIG. 6, the second power supply module 80 shown in FIG. 5 includes a third diode D3, a fourth diode D4, and a third power conversion module 800. A positive electrode of the third diode D3 is used as the first input end of the second power supply module 80 and is connected to the output end of the first power supply module 60, a negative electrode of the third diode D3 and a negative electrode of the fourth diode D4 are connected to an input end of the third power conversion module 800, a positive electrode of the fourth diode D4 is used as the second input end of the second power supply module 80 and is connected to the output end of the first power conversion module 70, and an output end of the third power conversion module 800 is used as the output end of the second power supply module 80. In this application, one or more functional modules that have a direct current DC/direct current DC conversion function (that is, a rectification function) or a direct current voltage boosting function in the second power supply module may be collectively referred to as the third power conversion module. For example, the third power conversion module 800 may be a DC/DC conversion module, and the third power conversion module 800 may include at least one DC/DC conversion unit (that is, one or more DC/DC conversion units).

In some feasible implementations, when the alternating current mains 50 or the output alternating current voltage of the power conversion module 40 is powered down or powered off, the second direct current voltage output by the first power conversion module 70 is less than the first direct current voltage output by the first power supply module 60. In this case, the first direct current voltage may be understood as a direct current auxiliary power supply (that is, the direct current auxiliary power supply available to the battery management system 90) that supplies power to the battery management system 90. When the second direct current voltage is less than the first direct current voltage, the third diode D3 is conducted, and the fourth diode D4 is cut off, so that the third diode D3 and the fourth diode D4 perform an either-or selection, to output the first direct current voltage to the third power conversion module 800. In this case, the third power conversion module 800 may use the first direct current voltage as the target voltage, convert the target voltage into a target direct current voltage, and supply power to the battery management system 90 based on the target direct current voltage.

In some feasible implementations, when the alternating current mains 50 or the output alternating current voltage of the power conversion module 40 normally supplies power, the second direct current voltage output by the first power conversion module 70 is greater than the first direct current voltage output by the first power supply module 60. In this case, the second direct current voltage may be understood as a direct current auxiliary power supply (that is, the direct current auxiliary power supply available to the battery management system 90) that supplies power to the battery management system 90. In other words, the alternating current mains 50 or the output alternating current voltage of the power conversion module 40 may be used as an alternating current backup power supply that supplies power to the battery management system 90. When the second direct current voltage is greater than the first direct current voltage, the third diode D3 is cut off, and the fourth diode D4 is conducted, so that the third diode D3 and the fourth diode D4 perform an either-or selection, to output the second direct current voltage to the third power conversion module 800. In this case, the third power conversion module 800 may use the second direct current voltage as the target voltage, convert the target voltage into a target direct current voltage, and supply power to the battery management system based on the target direct current voltage.

In some feasible implementations, when the energy storage module 10, the fourth power conversion module 20, the alternating current mains 50, and the power conversion module 40 all work normally, a priority of the alternating current mains 50 or the output alternating current voltage of the power conversion module 40 as an alternating current backup power supply to supply power to the battery management system 90 is greater than a priority of the output direct current voltage of the fourth power conversion module 20 (that is, the bus voltage of the direct current bus 30) as a direct current backup power supply to supply power to the battery management system 90; and a priority of the output direct current voltage of the fourth power conversion module 20 as a direct current backup power supply to supply power to the battery management system 90 is greater than a priority of the output direct current voltage of the energy storage module 10 as a direct current backup power supply to supply power to the battery management system 90. It can be learned that power supply reliability may be improved and costs of the energy storage system may be reduced by using a plurality of backup power supplies to supply power to the battery management system. Optionally, when none of the energy storage module 10, the fourth power conversion module 20, the alternating current mains 50, or the power conversion module 40 can supply power to the battery management system 90, an uninterruptible power supply may alternatively be configured in the energy storage system 1, to supply power to the battery management system 90.

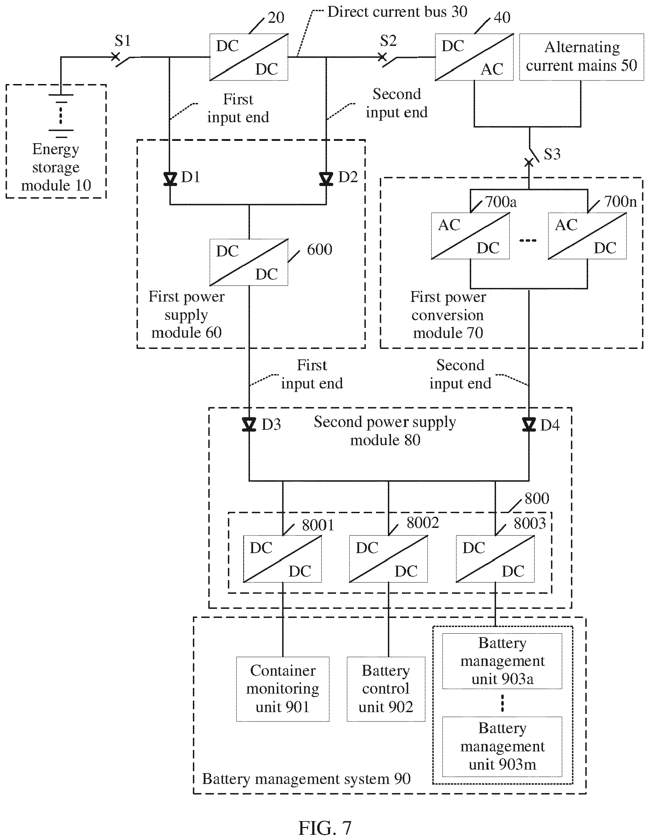

In some feasible implementations, the battery management system 90 includes a plurality of combinations of a container monitoring unit (container monitoring unit, CMU), a battery control unit (battery control unit, BCU), and a plurality of battery management units (battery management unit, BMU). This may be specifically determined according to an actual application scenario, and is not limited herein. FIG. 7 is a schematic diagram of still another structure of an energy storage system according to this application. As shown in FIG. 7, the battery management system 90 shown in FIG. 6 may be a distributed battery management system with a three-layer structure, and may be classified into a container monitoring unit 901, a battery control unit 902, and a plurality of battery management units (for example, a battery management unit 903a to a battery management unit 903m) according to a structure level. The battery control unit 902 may be integrated into the fourth power conversion module 20, or the battery control unit 902 may be integrated outside the fourth power conversion module 20. This may be specifically determined according to an actual application scenario, and is not limited herein. One battery management unit in the battery management unit 903a to the battery management unit 903m may be connected to one battery pack in the energy storage module 10, that is, one battery pack corresponds to one battery management unit. As shown in FIG. 7, to meet different power requirements of the container monitoring unit 901, the battery control unit 902, and the battery management unit 903a to the battery management unit 903m, the third power conversion module 800 may include three DC/DC conversion units (for example, a DC/DC conversion unit 8001 to a DC/DC conversion unit 8003), and the three DC/DC conversion units herein may be used for supplying power by respectively connecting to the container monitoring unit 901, the battery control unit 902, and the battery management unit 903a to the battery management unit 903m. For example, the DC/DC conversion unit 8001 may supply power to the container monitoring unit 901 according to a power requirement of the container monitoring unit 901; the DC/DC conversion unit 8002 may supply power to the battery control unit 902 according to a power requirement of the battery control unit 902; and the DC/DC conversion unit 8003 may supply power to the battery management unit 903a to the battery management unit 903m according to a power requirement of the battery management unit 903a to the battery management unit 903m.

In some feasible implementations, after the DC/DC conversion unit 8001 supplies power to the container monitoring unit 901, the container monitoring unit 901 may collect a system parameter of the energy storage system 1 in real time or perform data transmission with a system controller of the energy storage system 1 (for example, receiving different scheduling instructions of the system controller of the energy storage system 1), to monitor a working status of the energy storage system 1 in real time. The system parameter herein may include a temperature and humidity of the energy storage system 1, or another parameter. After detecting that the working status of the energy storage system 1 is abnormal, the container monitoring unit 901 may send alarm information to the system controller of the energy storage system 1, to prompt a user to maintain the energy storage system 1 in time.

In some feasible implementations, when the energy storage system 10 includes a plurality of battery clusters, after the DC/DC conversion unit 8002 supplies power to the battery control unit 902, the battery control unit 902 may detect a battery cluster parameter of each battery cluster, and control, based on the battery cluster parameter of each battery cluster, charging or discharging of a battery pack in each battery cluster, to balance a current and a voltage of each battery cluster. The battery cluster parameter herein may include a state of charge (state of charge, SOC) value, a state of health (state of health, SOH) value, a state of power (state of power, SOP) value, and another parameter. After the DC/DC conversion unit 8003 supplies power to the battery management unit 903a to the battery management unit 903m, battery management units in the battery management unit 903a to the battery management unit 903m may each balance a battery parameter of each battery pack in each battery cluster. The battery parameter herein may include a state of charge value, a state of health value, a state of power value, a maximum working current, and another parameter. It can be learned that, after the battery management system 90 is powered by using the alternating current mains 50 or the output alternating current voltage of the power conversion module 40, the output direct current voltage of the fourth power conversion module 20 (that is, the bus voltage of the direct current bus 30), or the output direct current voltage of the energy storage module 10, the battery management system 90 may monitor information such as a voltage, a current, and an electrochemical cell temperature of a battery in the energy storage module 10 in real time, and may further monitor a working status of the energy storage system 1 to ensure battery safety and extend a service life of the energy storage system 1, so that the energy storage system 1 can better supply power to a load, thereby improving power supply efficiency of the energy storage system 1, and extending an application scope.

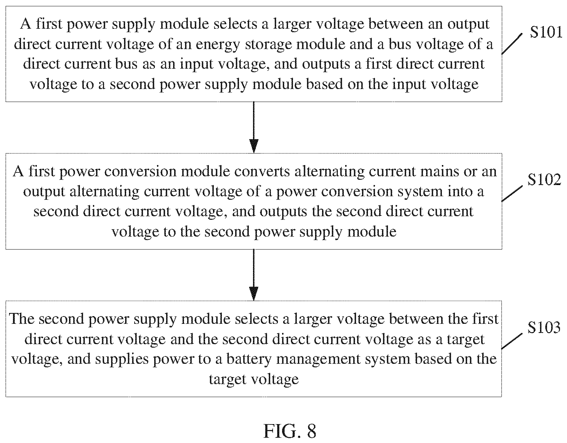

FIG. 8 is a schematic flowchart of a power supply method for a battery management system according to this application. The method is applicable to an energy storage system (for example, the energy storage system provided in FIG. 3 to FIG. 7). The energy storage system includes an energy storage module, a direct current bus, a power conversion module, a first power supply module, a second power supply module, and a battery management system. A first input end of the first power supply module is connected to the energy storage module, a second input end of the first power supply module is connected to the direct current bus, an output end of the first power supply module is connected to a first input end of the second power supply module, a second input end of the second power supply module is connected to alternating current mains or the power conversion module by using a first power conversion module, and an output end of the second power supply module is connected to the battery management system. As shown in FIG. 8, the method includes the following step S101 to step S103.

Step S 101: The first power supply module selects a larger voltage between an output direct current voltage of the energy storage module and a bus voltage of the direct current bus as an input voltage, and outputs a first direct current voltage to the second power supply module based on the input voltage.

In some feasible implementations, when the output direct current voltage of the energy storage module is greater than the bus voltage of the direct current bus, the first power supply module may use the output direct current voltage of the energy storage module as the input voltage, convert the input voltage into the first direct current voltage, and output the first direct current voltage to the second power supply module. On the contrary, when the output direct current voltage of the energy storage module is less than the bus voltage of the direct current bus, the first power supply module may use the bus voltage of the direct current bus as the input voltage, convert the input voltage into the first direct current voltage, and output the first direct current voltage to the second power supply module.

Step S102: The first power conversion module converts the alternating current mains or an output alternating current voltage of the power conversion module into a second direct current voltage, and outputs the second direct current voltage to the second power supply module.

In some feasible implementations, the first power conversion module includes a plurality of power conversion units, and a quantity of power conversion units is greater than a target quantity required by supply power of the energy storage system. When a target power conversion unit in the plurality of power conversion units is faulty, the first power conversion module may convert, based on each power conversion unit other than the target power conversion unit, the alternating current mains or the output alternating current voltage of the power conversion module into the second direct current voltage, and output the second direct current voltage to the second power supply module.

Step S103: The second power supply module selects a larger voltage between the first direct current voltage and the second direct current voltage as a target voltage, and supplies power to the battery management system based on the target voltage.

In some feasible implementations, when the first direct current voltage is greater than the second direct current voltage, the second power supply module may use the first direct current voltage as the target voltage, convert the target voltage into a target direct current voltage, and supply power to the battery management system based on the target direct current voltage. On the contrary, when the first direct current voltage is less than the second direct current voltage, the second power supply module may use the second direct current voltage as the target voltage, convert the target voltage into a target direct current voltage, and supply power to the battery management system based on the target direct current voltage.

In a specific implementation, for more operations in the power supply method for a battery management system provided in this application, refer to the implementations performed by the first power supply module, the first power conversion module, and the second power supply module in the energy storage system shown in FIG. 3 to FIG. 7 and the working principles thereof. Details are not described herein again.

In this application, a plurality of backup power supplies may be used to supply power to the battery management system, thereby improving power supply reliability for the battery management system. In addition, power is supplied from the energy storage system to the battery management system, thereby reducing costs of the energy storage system, increasing economical efficiency of the energy storage system, and extending an application scope.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An energy storage system, wherein the energy storage system comprises an energy storage module, a direct current bus, a power conversion module, a first power supply module, a second power supply module, and a battery management system, wherein a first input end of the first power supply module is connected to the energy storage module, a second input end of the first power supply module is connected to the direct current bus, an output end of the first power supply module is connected to a first input end of the second power supply module, a second input end of the second power supply module is connected to alternating current mains or the power conversion module by using a first power conversion module, and an output end of the second power supply module is connected to the battery management system;
the first power supply module is configured to: select a larger voltage between an output direct current voltage of the energy storage module and a bus voltage of the direct current bus as an input voltage, and output a first direct current voltage to the second power supply module based on the input voltage;
the first power conversion module is configured to: convert the alternating current mains or an output alternating current voltage of the power conversion module into a second direct current voltage, and output the second direct current voltage to the second power supply module; and
the second power supply module is configured to: select a larger voltage between the first direct current voltage and the second direct current voltage as a target voltage, and supply power to the battery management system based on the target voltage.

2. The energy storage system according to claim 1, wherein the first power supply module comprises a first diode, a second diode, and a second power conversion module, a positive electrode of the first diode is used as the first input end of the first power supply module and is connected to the energy storage module, a positive electrode of the second diode is used as the second input end of the first power supply module and is connected to the direct current bus, a negative electrode of the first diode and a negative electrode of the second diode are connected to an input end of the second power conversion module, and an output end of the second power conversion module is used as the output end of the first power supply module.

3. The energy storage system according to claim 2, wherein the second power conversion module is configured to: when the output direct current voltage of the energy storage module is greater than the bus voltage of the direct current bus, use the output direct current voltage of the energy storage module as the input voltage, and convert the input voltage into the first direct current voltage.

4. The energy storage system according to claim 2, wherein the second power conversion module is configured to: when the output direct current voltage of the energy storage module is less than the bus voltage of the direct current bus, use the bus voltage of the direct current bus as the input voltage, and convert the input voltage into the first direct current voltage.

5. The energy storage system according to any one of claims 1 to 4, wherein the second power supply module comprises a third diode, a fourth diode, and a third power conversion module, a positive electrode of the third diode is used as the first input end of the second power supply module and is connected to the output end of the first power supply module, a negative electrode of the third diode and a negative electrode of the fourth diode are connected to an input end of the third power conversion module, a positive electrode of the fourth diode is used as the second input end of the second power supply module and is connected to the first power conversion module, and an output end of the third power conversion module is used as the output end of the second power supply module.

6. The energy storage system according to claim 5, wherein the third power conversion module is configured to: when the first direct current voltage is greater than the second direct current voltage, use the first direct current voltage as the target voltage, convert the target voltage into a target direct current voltage, and supply power to the battery management system based on the target direct current voltage.

7. The energy storage system according to claim 5, wherein the third power conversion module is configured to: when the first direct current voltage is less than the second direct current voltage, use the second direct current voltage as the target voltage, convert the target voltage into a target direct current voltage, and supply power to the battery management system based on the target direct current voltage.

8. The energy storage system according to any one of claims 1 to 7, wherein the first power conversion module comprises a plurality of power conversion units, and a quantity of the power conversion units is greater than a target quantity required by supply power of the energy storage system; and
the first power conversion module is configured to: when a target power conversion unit in the plurality of power conversion units is faulty, convert, based on each power conversion unit other than the target power conversion unit, the alternating current mains or the output alternating current voltage of the power conversion module into the second direct current voltage.

9. The energy storage system according to any one of claims 1 to 8, wherein the battery management system comprises a container monitoring unit; and
the container monitoring unit is configured to collect a system parameter of the energy storage system or perform data transmission with a system controller of the energy storage system, to monitor a working status of the energy storage system, wherein
the system parameter comprises a temperature and humidity of the energy storage system.

10. The energy storage system according to any one of claims 1 to 9, wherein the battery management system further comprises a battery control unit, and the energy storage module comprises at least one battery cluster; and
the battery control unit is configured to: detect a battery cluster parameter of each battery cluster, and control, based on the battery cluster parameter of each battery cluster, charging or discharging of a battery pack in each battery cluster, to balance a current and a voltage of each battery cluster, wherein
the battery cluster parameter comprises a state of charge value, a state of health value, and a state of power value.

11. The energy storage system according to any one of claims 1 to 10, wherein the battery management system further comprises a plurality of battery management units, the energy storage module comprises at least one battery cluster, one battery cluster comprises a plurality of battery packs, and one battery pack corresponds to one battery management unit; and
each of the plurality of battery management units is configured to balance a battery parameter of each battery pack in each battery cluster.

12. The energy storage system according to any one of claims 1 to 11, wherein the energy storage system further comprises a fourth power conversion module, and the energy storage module is connected to the direct current bus by using the fourth power conversion module; and
the fourth power conversion module is configured to convert the output direct current voltage of the energy storage module into the bus voltage required by the direct current bus.

13. The energy storage system according to claim 12, wherein the battery control unit in the battery management system is integrated into the fourth power conversion module.

14. A power supply method for a battery management system, wherein the method is applicable to an energy storage system, and the energy storage system comprises an energy storage module, a direct current bus, a power conversion module, a first power supply module, a second power supply module, and a battery management system, wherein a first input end of the first power supply module is connected to the energy storage module, a second input end of the first power supply module is connected to the direct current bus, an output end of the first power supply module is connected to a first input end of the second power supply module, a second input end of the second power supply module is connected to alternating current mains or the power conversion module by using a first power conversion module, and an output end of the second power supply module is connected to the battery management system; and
the method comprises:
selecting, by the first power supply module, a larger voltage between an output direct current voltage of the energy storage module and a bus voltage of the direct current bus as an input voltage, and outputting a first direct current voltage to the second power supply module based on the input voltage;
converting, by the first power conversion module, the alternating current mains or an output alternating current voltage of the power conversion module into a second direct current voltage, and outputting the second direct current voltage to the second power supply module; and
selecting, by the second power supply module, a larger voltage between the first direct current voltage and the second direct current voltage as a target voltage, and supplying power to the battery management system based on the target voltage.

15. The method according to claim 14, wherein the selecting, by the first power supply module, a larger voltage between an output direct current voltage of the energy storage module and a bus voltage of the direct current bus as an input voltage, and output a first direct current voltage to the second power supply module based on the input voltage comprises:
when the output direct current voltage of the energy storage module is greater than the bus voltage of the direct current bus, using, by the first power supply module, the output direct current voltage of the energy storage module as the input voltage, converting the input voltage into the first direct current voltage, and outputting the first direct current voltage to the second power supply module.

16. The method according to claim 14, wherein the selecting, by the first power supply module, a larger voltage between an output direct current voltage of the energy storage module and a bus voltage of the direct current bus as an input voltage, and output a first direct current voltage to the second power supply module based on the input voltage comprises:
when the output direct current voltage of the energy storage module is less than the bus voltage of the direct current bus, using, by the first power supply module, the bus voltage of the direct current bus as the input voltage, converting the input voltage into the first direct current voltage, and outputting the first direct current voltage to the second power supply module.

17. The method according to any one of claims 14 to 16, wherein the selecting, by the second power supply module, a larger voltage between the first direct current voltage and the second direct current voltage as a target voltage, and supply power to the battery management system based on the target voltage comprises:
when the first direct current voltage is greater than the second direct current voltage, using, by the second power supply module, the first direct current voltage as the target voltage, converting the target voltage into a target direct current voltage, and supplying power to the battery management system based on the target direct current voltage.

18. The method according to any one of claims 14 to 16, wherein the selecting, by the second power supply module, a larger voltage between the first direct current voltage and the second direct current voltage as a target voltage, and supply power to the battery management system based on the target voltage comprises:
when the first direct current voltage is less than the second direct current voltage, using, by the second power supply module, the second direct current voltage as the target voltage, converting the target voltage into a target direct current voltage, and supplying power to the battery management system based on the target direct current voltage.

19. The method according to any one of claims 14 to 18, wherein the first power conversion module comprises a plurality of power conversion units, and a quantity of the power conversion units is greater than a target quantity required by supply power of the energy storage system; and
the converting, by the first power conversion module, the alternating current mains or an output alternating current voltage of the power conversion module into a second direct current voltage comprises:
when a target power conversion unit in the plurality of power conversion units is faulty, converting, by the first power conversion module based on each power conversion unit other than the target power conversion unit, the alternating current mains or the output alternating current voltage of the power conversion module into the second direct current voltage.
